# EUROPEAN PATENT APPLICATION

(11) **EP 4 447 017 A1**
(43) Date of publication of application: **16.10.2024**
(21) Application number: 22921901.9
(22) Date of filing: 21.01.2022
(51) Int. Cl.: G08G 1/0968, G01C 21/34, G08G 1/09

(54) **OPERATION ROUTE UPDATE DEVICE, OPERATION ROUTE UPDATE METHOD, AND OPERATION ROUTE UPDATE PROGRAM**

(71) Applicant: MITSUBISHI ELECTRIC CORPORATION, Chiyoda-ku Tokyo 100-8310 (JP)
(72) Inventor: OSAWA, Shunya, Tokyo 100-8310 (JP); KAWASHIMA, Keigo, Tokyo 100-8310 (JP); TSUCHIYA, Masato, Tokyo 100-8310 (JP); FURUTA, Satoru, Tokyo 100-8310 (JP)
(74) Representative: Pfenning, Meinig & Partner mbB
(86) International application number: PCT/JP2022/002167
(87) International publication number: WO 2023/139744

(57) **Abstract**

An operation route updating device (100) updates an operation route (20) of a mobile object (300) loaded with a package. A score calculation unit (120) calculates a package score that quantifies fragility of the package based on acquirement of package information representing a state of the package while the mobile object (300) is traveling on the operation route (20). The score calculation unit (120) further calculates a route score that quantifies a shaking degree of the mobile object (300) on a scheduled operation route (21) based on surrounding area information representing an environment and a road situation of a surrounding area of the scheduled operation route (21) in the operation route (20). When the package score is equal to or greater than a first set value, a route updating unit (140) creates the scheduled operation route (21) with the route score of less than a second set value, and updates the operation route with the scheduled operation route (21) that has been created.

## Description

### Technical Field

The present disclosure relates to an operation route updating device, an operation route updating method, and an operation route updating program.

### Background Art

When an operation route of a mobile object such as a transportation vehicle or an autonomous vehicle is created, an optimal route is set based on traffic information such as congestion, construction, or accidents. At this time, roads in bad conditions may be set, such as a crowded road or a road with heavy traffic, a road with many intersections or curves, or an unpaved road with an uneven surface. As a result, problems such as poor ride comfort or damage to fragile items occur.

An autonomous vehicle is, for example, a vehicle such as an AMR or a PMV. AMR is an abbreviation for autonomous mobile robot. PMV is an abbreviation for personal mobility vehicle.

Patent Literature 1 discloses a route search system that acquires a route to a destination from a plurality of predetermined routes by avoiding a road with a high possibility of damage to packages and using a road with a low possibility of damage to packages.

### Citation List

### Patent Literature

Patent Literature 1: WO 2019/176230 A1

### Summary of Invention

### Technical Problem

In the route search system disclosed in Patent Literature 1, a route with the lowest possibility of damage to packages is selected from a plurality of predetermined routes. However, a problem is that it is not possible to deal with a case where the possibility of damage to packages becomes high while traveling on the selected route due to a factor such as the weather, the amount of packages, or an accident that has occurred on the route.

An object of the present disclosure is, even when a possibility of negative influence on a package becomes high while traveling on an operation route, to update the operation route in real time to an operation route that can prevent the negative influence on the package.

### Solution to Problem

An operation route updating device according to the present disclosure updates an operation route of a mobile object loaded with a package, and the operation route updating device includes
a score calculation unit to, while the mobile object is traveling on the operation route, acquire package information representing a state of the package loaded on the mobile object, calculate a package score that quantifies fragility of the package based on the package information, acquire surrounding area information representing an environment of a surrounding area and a road situation of a scheduled operation route in the operation route, and calculate a route score that quantifies a shaking degree of the mobile object on the scheduled operation, route based on the surrounding area information; and
a route updating unit to determine whether the package score is equal to or greater than a first set value, and when the package score is equal to or greater than the first set value, create the scheduled operation route with the route score of less than a second set value, and update the operation route with the scheduled operation route that has been created.

### Advantageous Effects of Invention

In an operation route updating device according to the present disclosure, a score calculation unit calculates a package score based on package information, and also calculates a route score based on surrounding area information of a scheduled operation route while a mobile object is traveling on an operation route. Then, when the package score is equal to or greater than a first set value, a route updating unit creates a scheduled operation route with the route score of less than a second set value, and updates the operation route with the created scheduled operation route. Therefore, with the operation route updating device according to the present disclosure, even when a possibility of negative influence on a package becomes high while traveling on an operation route, it is possible to update the operation route in real time to an operation route with reduced negative influence on the package.

### Brief Description of Drawings

Fig. 1 is a figure illustrating an example of a configuration of an operation route updating device according to Embodiment 1;
Fig. 2 is a figure illustrating an example of a detailed configuration of a data acquisition unit and a score calculation unit according to Embodiment 1;
Fig. 3 is a flowchart illustrating overall processing of the operation route updating device according to Embodiment 1;
Fig. 4 is a flowchart illustrating a flow of a route creation process according to Embodiment 1;
Fig. 5 is a flowchart illustrating a flow of a route updating process according to Embodiment 1;
Fig. 6 is a figure illustrating an example of a configuration of package master information according to Embodiment 1 ;
Fig. 7 is a figure illustrating an example of a configuration of package state information according to Embodiment 1;
Fig. 8 is a figure illustrating an example of a configuration of traveling state information according to Embodiment 1;
Fig. 9 is a figure illustrating an example of a configuration of road situation information according to Embodiment 1; and
Fig. 10 is a figure illustrating an example of a configuration of the operation route updating device according to a variation of Embodiment 1.

### Description of Embodiments

This embodiment will be described hereinafter using the drawings. In the drawings, the same or corresponding parts are denoted by the same reference sign. In the description of the embodiment, description will be omitted or simplified as appropriate for the same or corresponding parts. Arrows in the drawings mainly indicate flows of data or flows of processing.

### Embodiment 1.

### *** Description of Configuration ***

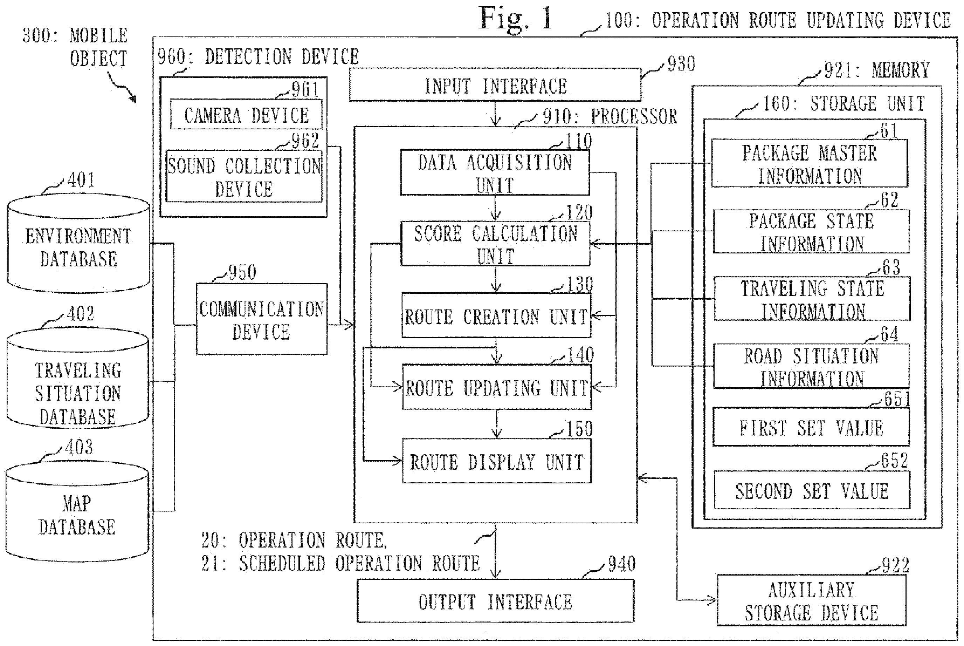

Fig. 1 is a figure illustrating an example of a configuration of an operation route updating device 100 according to this embodiment.

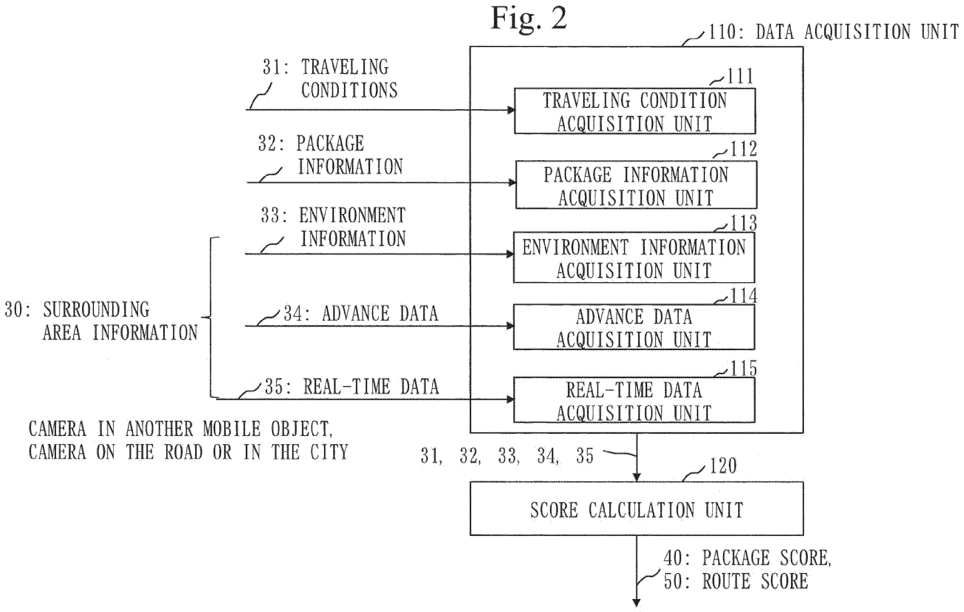

Fig. 2 is a figure illustrating an example of a detailed configuration of a data acquisition unit 110 and a score calculation unit 120 according to this embodiment.

The operation route updating device 100 acquires a destination of a mobile object 300 loaded with a package and creates an operation route 20 to the destination. Then, when the mobile object 300 starts traveling on the operation route 20, the operation route updating device 100 regularly or irregularly checks the state of the package on the mobile object 300 and the situation of a scheduled operation route 21 in the operation route 20. The scheduled operation route in the operation route 20 is the route that is scheduled to be traveled in the operation route 20.

The operation route updating device 100 updates the operation route 20 to a route that makes the package less likely to be damaged, depending on the state of the package and the situation of the scheduled operation route 21.

The operation route updating device 100 is installed in the mobile object 300 loaded with a package, for example. Alternatively, the operation route updating device 100 may communicate with the mobile object 300 loaded with a package via a network, and transmit the operation route 20 that is created and the operation route 20 that is updated to the mobile object 300.

In this embodiment, it is assumed that the operation route updating device 100 is installed in the mobile object 300.

The operation route updating device 100 is a computer. The operation route updating device 100 includes a processor 910, and also includes other hardware components such as a memory 921, an auxiliary storage device 922, an input interface 930, an output interface 940, a communication device 950, and a detection device 960. The processor 910 is connected with the other hardware components via signal lines and controls the other hardware components.

The operation route updating device 100 includes, as functional elements, the data acquisition unit 110, the score calculation unit 120, a route creation unit 130, a route updating unit 140, a route display unit 150, and a storage unit 160.

The data acquisition unit 110 includes a traveling condition acquisition unit 111, a package information acquisition unit 112, an environment information acquisition unit 113, an advance data acquisition unit 114, and a real-time data acquisition unit 115.

The storage unit 160 stores package master information 61, package state information 62, traveling state information 63, road situation information 64, a first set value 651, and a second set value 652.

As indicated in Fig. 2, the traveling condition acquisition unit 111 acquires traveling conditions 31. The package information acquisition unit 112 acquires package information 32. The environment information acquisition unit 113 acquires environment information 33. The advance data acquisition unit 114 acquires advance data 34. The real-time data acquisition unit 115 acquires real-time data 35. The environment information 33, the advance data 34, and the real-time data 35 are also referred to collectively as surrounding area information 30.

The score calculation unit 120 acquires various types of information acquired by the data acquisition unit 110 and calculates a package score 40 and a route score 50.

The functions of the data acquisition unit 110, the score calculation unit 120, the route creation unit 130, the route updating unit 140, and the route display unit 150 are realized by software. The storage unit 160 is provided in the memory 921. The storage unit 160 may be provided in the auxiliary storage device 922, or may be divided and provided in the memory 921 and the auxiliary storage device 922.

The processor 910 is a device that executes an operation route updating program. The operation route updating program is a program that realizes the functions of the data acquisition unit 110, the score calculation unit 120, the route creation unit 130, the route updating unit 140, and the route display unit 150.

The processor 910 is an IC that performs operational processing. Specific examples of the processor 910 are a CPU, a DSP, and a GPU. 1C is an abbreviation for integrated circuit. CPU is an abbreviation for central processing unit. DSP is an abbreviation for digital signal processor. GPU is an abbreviation for graphics processing unit.

The memory 921 is a storage device to temporarily store data. Specific examples of the memory 921 are an SRAM and a DRAM. SRAM is an abbreviation for static random access memory. DRAM is an abbreviation for dynamic random access memory.

The auxiliary storage device 922 is a storage device to store data. A specific example of the auxiliary storage device 922 is an HDD. The auxiliary storage device 922 may be a portable storage medium such as an SD (registered trademark) memory card, CF, a NAND flash, a flexible disk, an optical disc, a compact disc, a Blu-ray (registered trademark) disc, or a DVD. HDD is an abbreviation for hard disk drive. SD (registered trademark) is an abbreviation for Secure Digital. CF is an abbreviation for CompactFlash (registered trademark). DVD is an abbreviation for digital versatile disk.

The input interface 930 is a port to be connected with an input device such as a mouse, a keyboard, or a touch panel. Specifically, the input interface 930 is a USB terminal. The input interface 930 may be a port to be connected with a LAN. USB is an abbreviation for Universal Serial Bus. LAN is an abbreviation for local area network. In Fig. 1, one input interface 930 is indicated, but there may be a plurality of input interfaces 930.

The output interface 940 is a port to which a cable of an output device such as a display is to be connected. Specifically, the output interface 940 is a USB terminal or an HDMI (registered trademark) terminal. Specifically, the display is an LCD. The output interface 940 is also called a display device interface. HDMI (registered trademark) is an abbreviation for High Definition Multimedia Interface. LCD is an abbreviation for liquid crystal display. In Fig. 1, one output interface 940 is indicated, but there may be a plurality of output interfaces 940.

The communication device 950 has a receiver and a transmitter. The communication device 950 is connected to a communication network such as a LAN, the Internet, or a telephone line. Specifically, the communication device 950 is a communication chip or a NIC. The communication device 950 may have a role of a communication interface that acquires information wirelessly. NIC is an abbreviation for network interface card.

The operation route updating device 100 communicates with external databases such as an environment database 401, a traveling situation database 402, and a map database 403 via the communication device 950.

The detection device 960 detects a state of the package loaded on the mobile object 300. The detection device 960 includes a camera device 961 that captures an image of movement of the package loaded on the mobile object 300 and a sound collection device 962 that detects sound emitted from the package loaded on the mobile object 300. Specifically, the detection device 960 is equipment such as a camera and a microphone.

The operation route updating program is executed in the operation route updating device 100. The operation route updating program is read by the processor 910 and executed by the processor 910. The memory 921 stores not only the operation route updating program but also an OS. OS is an abbreviation for operating system. The processor 910 executes the operation route updating program while executing the OS. The operation route updating program and the OS may be stored in the auxiliary storage device 922. The operation route updating program and the OS stored in the auxiliary storage device 922 are loaded into the memory 921 and executed by the processor 910. Part or the entirety of the operation route updating program may be embedded in the OS.

The operation route updating device 100 may include a plurality of processors as an alternative to the processor 910. These processors share the execution of the operation route updating program. Each of the processors is, like the processor 910, a device that executes the operation route updating program.

Data, information, signal values, and variable values that are used, processed, or output by the operation route updating program are stored in the memory 921 or the auxiliary storage device 922, or stored in a register or a cache memory in the processor 910.

"Unit" of each of the data acquisition unit 110, the score calculation unit 120, the route creation unit 130, the route updating unit 140, and the route display unit 150 may be interpreted as "circuit", "step", "procedure", "process", or "circuitry". The operation route updating program causes a computer to execute a data acquisition process, a score calculation process, a route creation process, a route updating process, and a route display process. "Process" of each of the data acquisition process, the score calculation process, the route creation process, the route updating process, and the route display process may be interpreted as "program", "program product", "computer readable storage medium storing a program", or "computer readable recording medium recording a program". An operation route updating method is a method performed by the operation route updating device 100 executing the operation route updating program.

The operation route updating program, may be stored and provided in a computer readable recording medium. Alternatively, the operation route updating program may be provided as a program product.

### ***Description of Operation ***

The operation of the operation route updating device 100 according to this embodiment will now be described. A procedure for the operation of the operation route updating device 100 is equivalent to the operation route updating method. A program that realizes the operation of the operation route updating device 100 is equivalent to the operation route updating program.

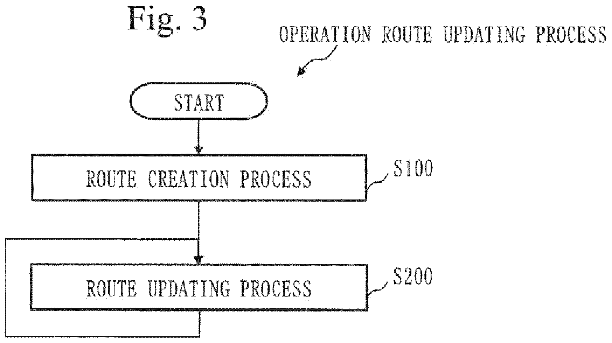

Fig. 3 is a flowchart illustrating an outline of overall processing of the operation route updating device 100 according to this embodiment.

An operation route updating process by the operation route updating device 100 includes the route creation process and the route updating process.

The route creation process is a process of acquiring a destination of the mobile object 300 and creating the operation route 20 to the destination.

The route updating process is a process that is performed while the mobile object 300 is traveling on the operation route 20. The route updating process is a process of checking the state of the package on the mobile object 300 and the situation of the scheduled operation route 21 in the operation route 20 and updating the operation route 20 to a route on which the package is less likely to be damaged, depending on the state of the package and the situation of the scheduled operation route 21, while the mobile object 300 is traveling on the operation route 20.

The route updating process may be repeatedly performed regularly. Alternatively, the route updating process may be performed irregularly when there is a notification such as detection of an obstacle on the scheduled operation route 21. Alternatively, the route updating process may be performed regularly and irregularly in combination.

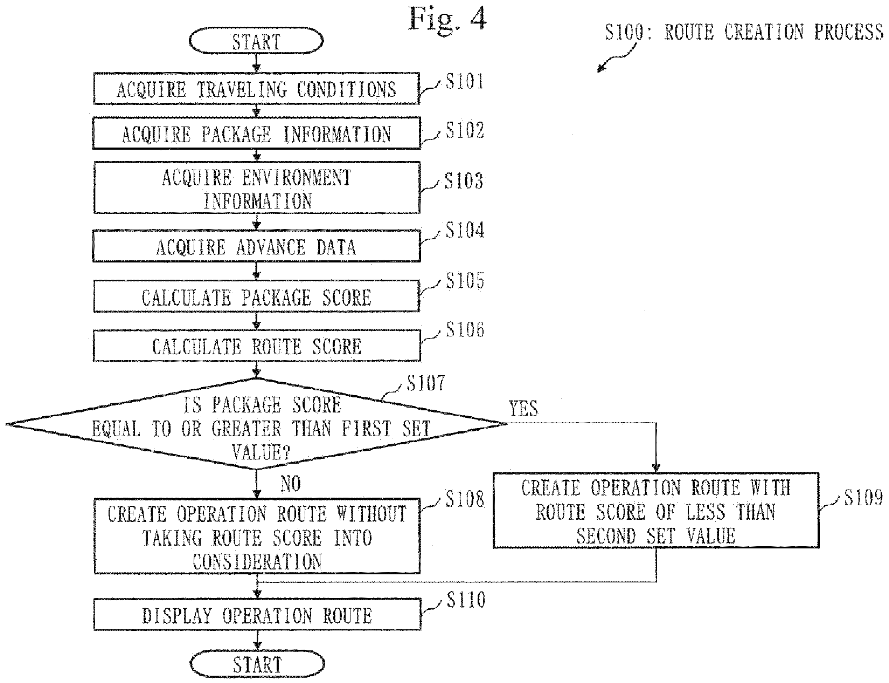

Fig. 4 is a flowchart illustrating a flow of the route creation process according to this embodiment.

### <Route creation process: S100>

In step S101, the traveling condition acquisition unit 111 acquires the traveling conditions 31 of the mobile object 300 loaded with a package. Specifically, the traveling condition acquisition unit 111 acquires the traveling conditions 31 such as a current location and a destination of the mobile object 300, information about a vehicle of the mobile object 300, and a package receipt time.

The current location is, for example, a location where the package is loaded. The destination is, for example, a package delivery destination.

The information about the vehicle is information such as whether the mobile object 300 can travel on a narrow road or a gravel road, a loadable package type such as a vehicle with a freezer or a vehicle with a refrigerator, or the maximum load capacity.

The package receipt time is, for example, the desired time to receive the package and the arrival deadline time by which the packet should arrive at the destination.

These traveling conditions 31 may be acquired from a user via the input interface 930 or the communication device 950. Alternatively, these traveling conditions 31 may be acquired from a database that records preset delivery schedules by performing a search using a date and time as a key.

In step S102, the package information acquisition unit 112 acquires the package information 32 representing the state of the package loaded on the mobile object.

Specifically, the package information acquisition unit 112 acquires, as the package information 32, a package type indicated on a package label of the package loaded on the mobile object. The package information acquisition unit 112 acquires, as the package information 32, a package type such as "precision equipment", "valuable item", "fragile", or "beware of water leakage" by reading a two-dimensional code indicated on the package label. Alternatively, the package information acquisition unit 112 may determine a package type based on the weight or size of the package.

In step S103 and step S104 below, the data acquisition unit 110 acquires the surrounding area information 30 representing the environment of the surrounding area of the scheduled operation route 21 in the operation route 20. The surrounding area information 30 includes the environment information 33 and the advance data 34 to be described below.

In step S103, the environment information acquisition unit 113 acquires, as the surrounding area information 30, the environment information 33 that is the environment of the scheduled operation route in the operation route 20 from the environment database 401 that stores environments.

Specifically, the environment information acquisition unit 113 acquires the weather of the scheduled operation route 21 as the environment information 33 from a weather database. The environment information acquisition unit 113 also acquires information about an event to be carried out near the scheduled operation route 21 as the environment information 33 from an event database that stores various events. In creating the operation route 20, the environment information 33 allows the operation route updating device 100 to realize processing such as avoiding a muddy road when it is raining or avoiding a place that is likely to be crowded with people and cars due to an event.

In step S104, the advance data acquisition unit 114 acquires the advance data 34 that is a road traveling situation as the surrounding area information 30 from the traveling situation database 402 that collects past traveling situations.

The traveling situation database 402 that collects past traveling situations is a database that collects information representing traveling situations on roads for vehicles that have traveled on the roads. Specifically, information such as the following is collected.
- the number of times, frequency, and locations of stop occurrences
- the number of times, frequency, and locations of acceleration and deceleration occurrences
- the number of times, frequency, and locations of occurrences of vertical shaking and horizontal shaking of the mobile object
- congestion degrees
- occurrence locations of accidents or near miss accidents

As described above, the surrounding area information 30 includes information representing the environment of the surrounding area and the road situation in the scheduled operation route 21 in the operation route 20.

In step S105, the score calculation unit 120 calculates the package score 40 that quantifies the fragility of the package based on the package information 32.

The package score 40 is a value representing the fragility of the package.

The process to calculate the package score 40 is substantially the same as step S202 to be described below. Details of the process to calculate the package score 40 will be described later.

In step S106, the score calculation unit 120 calculates the route score 50 that quantifies the degree of shaking of the mobile object 300 on the scheduled operation route 21 in the operation route 20 based on the surrounding area information 30 including the environment information 33 and the advance data 34.

The route score 50 is a value representing the degree of shaking of the mobile object on the route.

The process to calculate the route score 50 is substantially the same as step S203 to be described below. Details of the process to calculate the route score 50 will be described later.

In step S107, the route creation unit 130 determines whether the package score 40 is equal to or greater than a first set value.

If the package score 40 is less than the first set value, processing proceeds to step S108.

If the package score 40 is equal to or greater than the first set value, processing proceeds to step S109.

The first set value is set in advance as the upper limit value of the value representing the fragility of the package.

That the package score 40 is less than the first set value indicates that the state of the package is not fragile or the package is not easily damaged.

Therefore, in step S108, the route creation unit 130 creates the operation route 20 according to the traveling conditions without taking the route score 50 into consideration. That is, the operation route 20 is created which allows the mobile object 300 loaded with the package to travel from the current location to arrive at the destination by the receipt time without any problem.

On the other hand, that the package score 40 is equal to or greater than the first set value indicates that the state of the package is fragile or the package is easily damaged.

Therefore, in step S109, the route creation unit 130 creates the operation route 20 with the route score 50 of less than a second set value.

The second set value is set in advance as the upper limit value of the value representing the degree of shaking of the mobile object.

That the route score 50 is less than the second set value indicates that the shaking of the mobile object 300 is small.

On the other hand, that the route score 50 is equal to or greater than the second set value indicates that the shaking of the mobile object 300 is large.

Therefore, in step S109, the route creation unit 130 creates the operation route 20 which allows the mobile object 300 loaded with the package to travel from the current location to arrive at the destination by the receipt time without any problem and on which the shaking of the mobile object 300 is small so that the package is less likely to be damaged.

In step S110, the route display unit 150 superimposes the operation route 20 on map information and displays it on a display device. Specifically, the route display unit 150 acquires the map information from the map database 403, superimposes the operation route 20 on the map, and displays it.

If the mobile object 300 is operated manually by a driver, the operation route 20 suitable for transportation can be presented to the driver by displaying the operation route 20 on the display device. Even during automated driving, the driver can feel more at ease if the operation route 20 suitable for transportation is displayed to the driver.

If the mobile object 300 is unmanned, step S110 may be omitted.

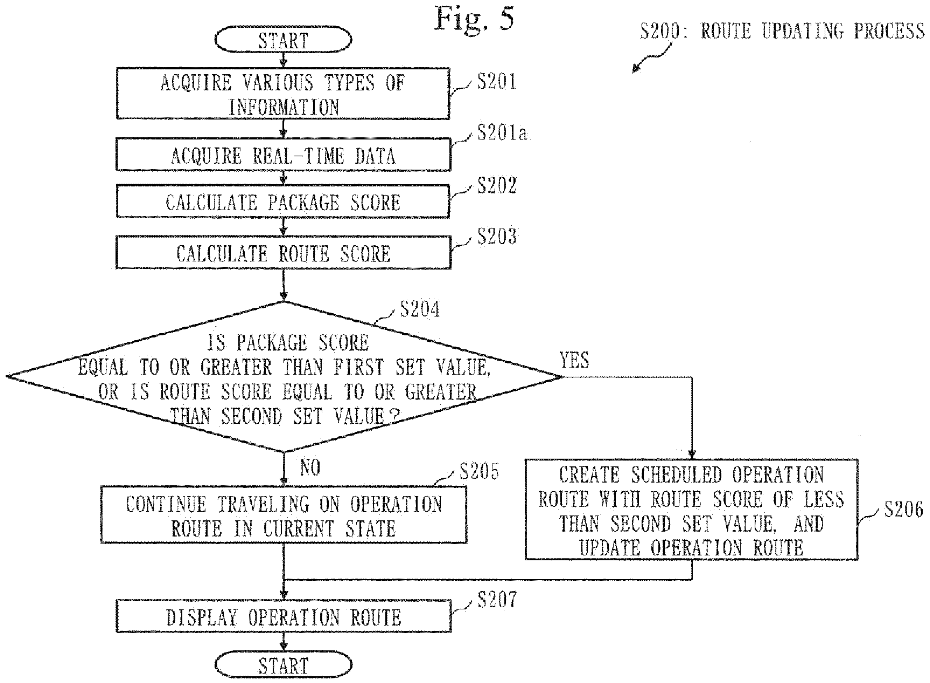

Fig. 5 is a flowchart illustrating a flow of the route updating process according to this embodiment.

As described above, the route updating process is performed while the mobile object 300 is traveling on the operation route 20 after the route creation process has been performed.

### <Route updating process: S200>

### <<Data acquisition process>>

In step S201, the data acquisition unit 110 acquires the traveling conditions 31, the package information 32, the environment information 33, and the advance data 34 while the mobile object 300 is traveling on the operation route 20.

In the traveling conditions 31, the vehicle state, the destination, or the receipt time may change while the mobile object 300 is traveling on the operation route 20. Therefore, the data acquisition unit 11 0 acquires the latest traveling conditions 31.

In the package information 32, the package state may change while the mobile object 300 is traveling on the operation route 20 due to factors such as unloading a package midway, loading a package midway, or changing the placement of a package midway. Since the fragility of a package changes due to, for example, an increase or decrease in the number of packages or a change in placement, the data acquisition unit 110 acquires the latest package information 32.

Regarding the environment information 33, the environment of the scheduled operation route 21 may change due to factors such as a change in the weather midway or an cancellation of an event. Therefore, the data acquisition unit 110 acquires the latest environment information 33.

Regarding the advance data 34, similarly, the data acquisition unit 110 acquires the latest advance data 34.

The processes to acquire the traveling conditions 31, the package information 32, the environment information 33, and the advance data 34 are substantially the same as step S101 to step S104.

The data acquisition unit 110 does not have to acquire all of the traveling conditions 31, the package information 32, the environment information 33, and the advance data 34 every time the route updating process is performed. A configuration may also be used in which the user can set which of these pieces of information should be re-acquired.

In step S201a, the real-time data acquisition unit 115 acquires the real-time data 35 that is an obstacle situation in the scheduled operation route 21 as the surrounding area information 30 from a sensor installed on the scheduled operation route 21 or from another mobile object traveling on the scheduled operation route 21.

Specifically, the current road situation is set in the real-time data 35. The current road situation is obtained from image data captured by a camera device such as a camera built in another mobile object or a camera installed on the road or in the city. Specifically, in the real-time data 35, the following is set: the presence or absence, types, and number of obstacles obtained by performing image recognition processing on image data from a camera installed in another mobile object or in the city.

The surrounding area information 30 includes the real-time data 35 in addition to the environment information 33 and the advance data 34.

### <<Package score calculation process>>

Next, in step S202, the score calculation unit 120 calculates the package score 40 that quantifies the fragility of the package based on the package information. The score calculation unit 120 acquires the package information 32 and re-calculates the package score 40 while the mobile object 300 is traveling on the operation route 20.

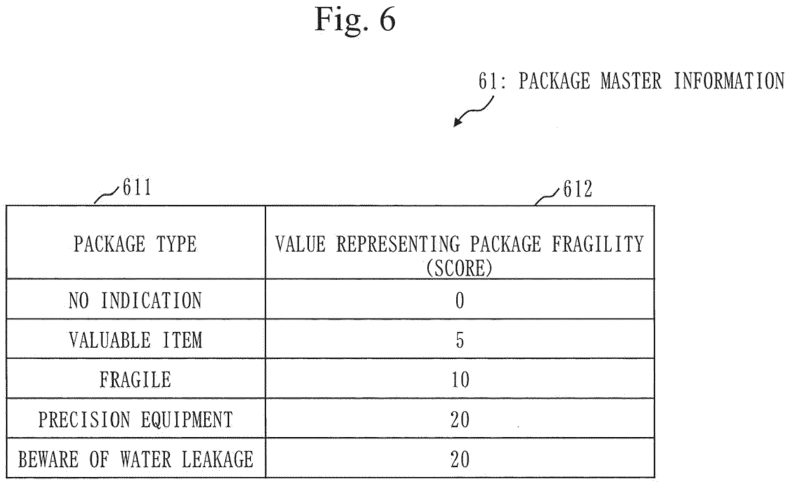

Fig. 6 is a figure illustrating an example of a configuration of the package master information 61 according to this embodiment.

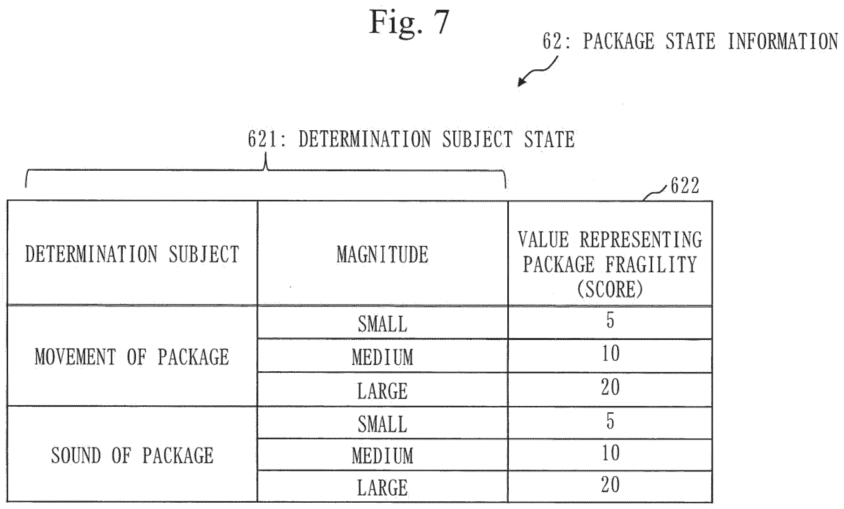

Fig. 7 is a figure illustrating an example of a configuration of the package state information 62 according to this embodiment.

The package master information 61 is information that associates a package type 611 with a value representing package fragility 612. As illustrated in Fig. 6, the package type 611 indicated on the package label and the value representing package fragility 612 are set. The value representing package fragility 612 indicates that the larger the value, the more fragile the package is.

The package state information 62 is information that associates a determination subject state 621 based on which the fragility of the package is to be determined with a value representing package fragility 622. In Fig. 7, a determination subject and a magnitude of the determination subject are used as the determination subject state 621.

The score calculation unit 120 acquires the value representing package fragility 612 corresponding to the package type included in the package information 32 from the package master information 61. Then, the score calculation unit 120 calculates the package score 40 using the value representing package fragility 612 that has been acquired.

For example, it is assumed that the package types included in the package information 32 of a package X are "fragile" and "beware of water leakage".

In this case, the package score derived from the package master information 61 is "fragile" 10 + "beware of water leakage" 20 = 30.

The score calculation unit 120 also acquires the state of the package detected by the detection device 960 such as the camera device 961 and the sound collection device 962. Specifically, the score calculation unit 120 acquires information on movement of the package as the state of the package from the camera device 961. The score calculation unit 120 also acquires information on sound emitted from the package, that is, information on abnormal sound of the package, as the state of the package from the sound collection device 962.

The score calculation unit 120 acquires the value representing package fragility 622 corresponding to the state of the package from the package state information 62. Then, the score calculation unit 120 calculates the package score 40 using the value representing package fragility 622 that has been acquired. Specifically, the score calculation unit 120 acquires the value representing package fragility 622 corresponding to the movement of the package from the package state information 62, and calculates the package score 40 using the value representing package fragility 622 that has been acquired.

The score calculation unit 120 also acquires the value representing package fragility 622 corresponding to the abnormal sound of the package from the package state information 62, and calculates the package score 40 using the value representing package fragility 622 that has been acquired.

The score calculation unit 120 quantifies the fragility of the package by detecting the movement (shakiness) of the loaded package or the abnormal sound (rattling noise) of the package using a camera or a microphone while the mobile object 300 is transporting the package.

The magnitude of the movement of the package is determined based on the movement distance of the package, and the magnitude of the abnormal sound of the package is determined based on the volume of the sound.

For example, the fragility of the package can be calculated such as if there are few packages and there is space around them, even small shaking will cause the package to move greatly and increase the possibility of damage.

In a specific example, it is assumed that the score calculation unit 120 has determined that "the movement of the package is medium" based on the information on the movement of the package from the camera device 961, and has determined that "the abnormal sound of the package is large" based on the information on the abnormal sound of the package from the sound collection device 962. In this case, the package score derived from the package state information 62 is "the movement of the package is medium" 10 + "the abnormal noise of the package is large" 20 = 30.

When this package is the above package X, the package score of the package X is 60 by adding the package score of 30 derived from the package master information 61 and the package score of 30 derived from the package state information 62.

### <<Route score calculation process>>

Next, in step S203, the score calculation unit 120 acquires the surrounding area information 30 representing the environment of the surrounding area of the scheduled operation route in the operation route 20, and calculates the route score 50 that quantifies the shaking degree of the mobile object 300 on the scheduled operation route based on the surrounding area information 30. The score calculation unit 120 acquires the surrounding area information 30 and re-calculates the route score 50 while the mobile object 300 is traveling on the operation route 20.

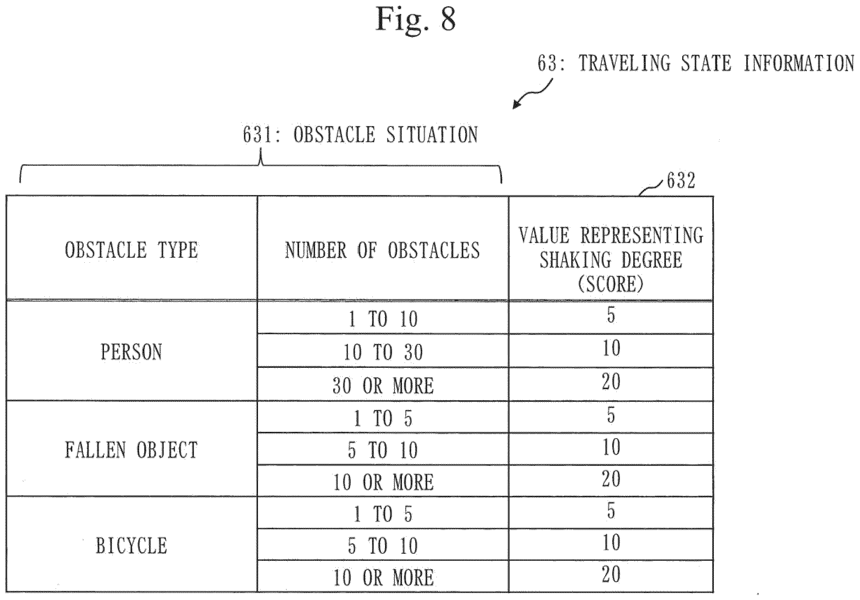

Fig. 8 is a figure illustrating an example of a configuration of the traveling state information 63 according to this embodiment.

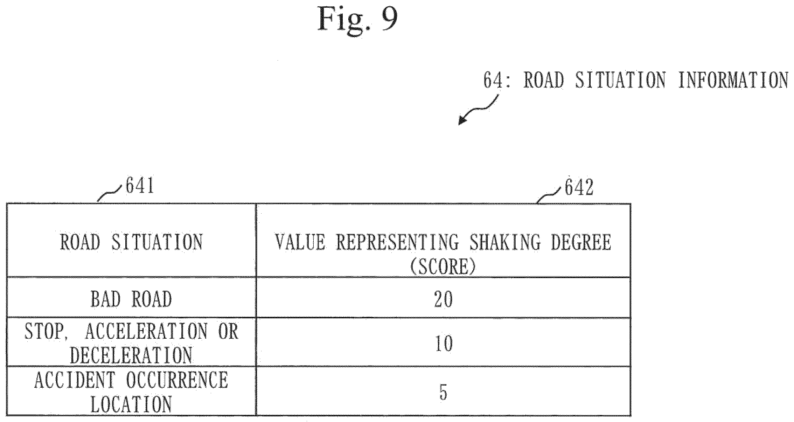

Fig. 9 is a figure illustrating an example of a configuration of the road situation information 64 according to this embodiment.

The traveling state information 63 is information that associates an obstacle situation 631 of the road with a value representing shaking degree 632 of the mobile object when traveling on the road. The obstacle situation 631 of the road is composed of types of obstacles and the number of obstacles.

The road situation information 64 is information that associates a road situation 641 with a value representing shaking degree 642 of the mobile object when traveling on the road.

Based on the real-time data 35, the score calculation unit 120 acquires the value representing shaking degree 632 of the mobile object corresponding to the obstacle situation on the scheduled operation route 21 from the traveling state information 63. Then, the score calculation unit 120 calculates the route score 50 using the value representing shaking degree 632 of the mobile object that has been acquired.

In the real-time data 35, the current road situation is set. The current road situation is obtained from image data captured by a camera device such as a camera built in another mobile object or a camera installed on the road or in the city. Specifically, in the real-time data 35, the following is set: the presence or absence, types, and the number of obstacles obtained by performing image recognition processing on image data from a camera installed in another mobile object or in the city. Therefore, according to the real-time data 35, it is possible to know the most recent occurrence of obstacles, which cannot be known from the environment information 33 or the advance data 34.

For example, it is assumed that information indicating that "there are about 15 fallen objects" on the scheduled operation route 21 is set in the real-time data 35. In this case, the score calculation unit 120 sets the value representing shaking degree "10" of the mobile object corresponding to the obstacle situation "there are about 15 fallen objects" as the route score.

That is, the presence or absence, types, and number of obstacles are obtained by performing image recognition on image data captured by a camera built in another mobile object or a camera installed on the road or in the city, and whether the road is a route with a small degree of shaking is quantified.

Based on the environment information 33 and the advance data 34, the score calculation unit 120 also acquires the value representing shaking degree 642 of the mobile object corresponding to the road situation on the scheduled operation route from the road situation information 64. Then, the score calculation unit 120 calculates the route score 50 using the value representing shaking degree 642 of the mobile object that has been acquired.

For example, it is assumed that the score calculation unit 120 has acquired information indicating "rainy weather" about the scheduled operation route 21 from the environment information 33, and has acquired information indicating that the scheduled operation route 21 is a "dirt road" from the advance data 34. The score calculation unit 120 determines that the scheduled operation route 21 is a "bad road" based on these pieces of information. Then, the score calculation unit 120 sets the value representing shaking degree "20" of the mobile object corresponding to the road situation of a "bad road" as the route score.

When the scheduled operation route is in a state where "there are about 15 fallen objects" and is a "bad road", the route score is 10 + 20 = 30.

Other specific examples are as indicated below.
- Determination of bad roads: rain and a dirt road, or determine a bad road by acquiring the number of occurrence times, frequency, and locations of vertical shaking and horizontal shaking of the mobile object obtained from a sensor installed in the vehicle
- Stops, accelerations, and decelerations: determine stops, accelerations, and decelerations by acquiring the number of occurrence times, frequency, and locations of stops, accelerations, and decelerations
- Accident occurrence locations: determine accident occurrence locations based on the number of occurrence times and frequency of past accidents

### <<Package score determination process>>

In step S204, the route updating unit 140 determines whether the package score 40 is equal to or greater than the first set value, or whether the route score 50 is equal to or greater than the second set value.

If "the package score 40 is not equal to or greater than the first set value, or the route score 50 is not equal to or greater than the second set value", that is, if "the package score 40 is less than the first set value and the route score 50 is less than the second set value", processing proceeds to step S205.

If "the package score 40 is equal to or greater than the first set value or the route score 50 is equal to or greater than the second set value", processing proceeds to step S206.

That "the package score 40 is less than the first set value and the route score 50 is less than the second set value" indicates that the state of the package is a state where it is less likely to be damaged and the state of the road is a state where the shaking of the mobile object is small.

Therefore, in step S205, the route updating unit 140 does nothing, and the mobile object 300 continues traveling the operation route 20 in the current state.

On the other hand, that "the package score 40 is equal to or greater than the first set value or the route score 50 is equal to or greater than the second set value" indicates that the state of the package is a state where it is likely to be damaged or the state of the route is a state with a high degree of shaking.

Therefore, in step S206, the route updating unit 140 creates a scheduled operation route with the route score 50 of less than the second set value. The route updating unit 140 creates the scheduled operation route 21 which allows the mobile object 300 loaded with the package to travel from the current location to arrive at the destination by the receipt time without any problem and on which the shaking of the mobile object 300 is small so that the package is not likely to be damaged.

Then, the route updating unit 140 updates the operation route 20 with the scheduled operation route 21 that has been created.

In step S207, the route display unit 150 superimposes the operation route 20 that has been updated on the map information and displays it on the display device. The route display unit 150 updates the scheduled operation route 21 in the operation route 20 being displayed to the scheduled operation route 21 that has been created.

### *** Other Configurations ***

### <Variation 1>

In this embodiment, the functions of the data acquisition unit 110, the score calculation unit 120, the route creation unit 130, the route updating unit 140, and the route display unit 150 are realized by software. As a variation, the functions of the data acquisition unit 110, the score calculation unit 120, the route creation unit 130, the route updating unit 140, and the route display unit 150 may be realized by hardware.

Specifically, the operation route updating device 100 includes an electronic circuit 909 in place of the processor 910.

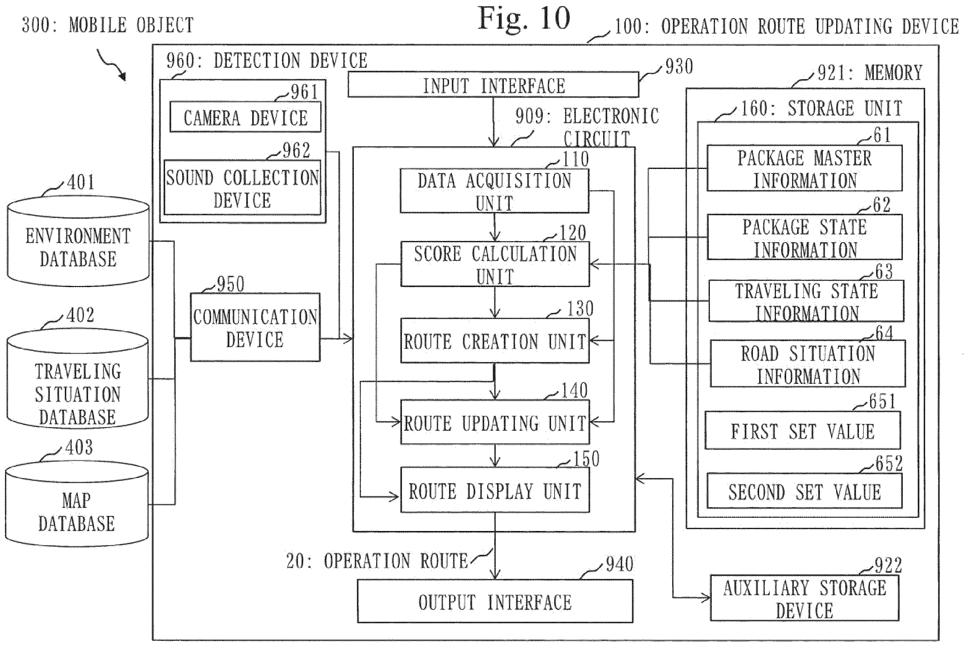

Fig. 10 is a figure illustrating an example of a configuration of the operation route updating device 100 according to the variation of this embodiment.

The electronic circuit 909 is a dedicated electronic circuit that realizes the functions of the data acquisition unit 110, the score calculation unit 120, the route creation unit 130, the route updating unit 140, and the route display unit 150. Specifically, the electronic circuit 909 is a single circuit, a composite circuit, a programmed processor, a parallel-programed processor, a logic IC, a GA, an ASIC, or an FPGA. GA is an abbreviation for gate array. ASIC is an abbreviation for application specific integrated circuit. FPGA is an abbreviation for field-programmable gate array.

The functions of the data acquisition unit 110, the score calculation unit 120, the route creation unit 130, the route updating unit 140, and the route display unit 150 may be realized by one electronic circuit, or may be distributed to and realized by a plurality of electronic circuits.

As another variation, some of the functions of the data acquisition unit 110, the score calculation unit 120, the route creation unit 130, the route updating unit 140, and the route display unit 150 may be realized by the electronic circuit and the rest of the functions may be realized by software. Alternatively, some or all of the functions of the data acquisition unit 110, the score calculation unit 120, the route creation unit 130, the route updating unit 140, and the route display unit 150 may be realized by firmware.

Each of the processor and the electronic circuit is also called processing circuitry. That is, the functions of the data acquisition unit 110, the score calculation unit 120, the route creation unit 130, the route updating unit 140, and the route display unit 150 are realized by the processing circuitry.

### *** Description of Effect of the Embodiment ***

An object of the present disclosure is, even when a possibility of negative influence on a package becomes high while traveling on an operation route, to update the operation route in real time to an operation route that can prevent the negative influence on the package.

To solve the problem of not being able to set an operation route that takes into consideration stopping and starting of a car, acceleration, and deceleration due to a sudden accident, congestion, and so on that have occurred in real time, it is possible to set an optimal operation route by using not only past information but also signals observed by one or more sensors installed in another mobile object, on the road, or in the town as one of parameters.

Even for a route on which a mobile object concerned has never traveled and observed, it is possible to set an optimal operation route based on observation signals of other mobile objects, and set an optimal operation route that also takes into consideration ride comfort and damage resistance of fragile items.

In Embodiment 1 above, each unit of the operation route updating device has been described as an independent functional block. However, the configuration of the operation route updating device may be different from the configuration in the above embodiment. The functional blocks of the operation route updating device may be arranged in any configuration, provided that the functions described in the above embodiment can be realized. The operation route updating device may be a system composed of a plurality of devices instead of one device.

Portions of Embodiment 1 may be implemented in combination. Alternatively, one portion of these embodiments may be implemented. These embodiments may be implemented as a whole or partially in any combination.

That is, in Embodiment 1, each embodiment can be freely combined, or any constituent element of each embodiment can be modified. Alternatively, in each embodiment, any constituent element can be omitted.

The above embodiment is an essentially preferable example, and is not intended to limit the scope of the present disclosure, the scope of applications of the present disclosure, and the scope of uses of the present disclosure. The above embodiment can be changed in various ways as necessary. For example, the procedures described using flowcharts or sequence diagrams may be changed as appropriate.

### Reference Signs List

20: operation route; 21: scheduled operation route; 30: surrounding area information; 31: traveling conditions; 32: package information; 33: environment information; 34: advance data; 35: real-time data; 40: package score; 50: route score; 61 : package master information; 611: package type; 612, 622: value representing package fragility; 62: package state information; 621: determination subject state; 63: traveling state information; 631: obstacle situation; 632, 642: value representing shaking degree; 64: road situation information; 641: road situation; 651: first set value; 652: second set value; 100: operation route updating device; 110: data acquisition unit; 111: traveling condition acquisition unit; 112: package information acquisition unit; 113: environment information acquisition unit; 114: advance data acquisition unit; 115: real-time data acquisition unit; 120: score calculation unit; 130: route creation unit; 140: route updating unit; 150: route display unit; 160: storage unit; 300: mobile object; 401: environment database; 402: traveling situation database; 403: map database; 909: electronic circuit; 910: processor; 921: memory; 922: auxiliary storage device; 930: input interface; 940: output interface; 950: communication device; 960: detection device; 961: camera device; 962: sound collection device.

## Claims

1. An operation route updating device that updates an operation route of a mobile object loaded with a package, the operation route updating device comprising:
a score calculation unit to, while the mobile object is traveling on the operation route, acquire package information representing a state of the package loaded on the mobile object, calculate a package score that quantifies fragility of the package based on the package information, acquire surrounding area information representing an environment of a surrounding area and a road situation of a scheduled operation route in the operation route, and calculate a route score that quantifies a shaking degree of the mobile object on the scheduled operation route based on the surrounding area information; and
a route updating unit to determine whether the package score is equal to or greater than a first set value, and when the package score is equal to or greater than the first set value, create the scheduled operation route with the route score of less than a second set value, and update the operation route with the scheduled operation route that has been created.

2. The operation route updating device according to claim 1,
wherein while the mobile object is traveling on the operation route, the score calculation unit acquires the package information to re-calculate the package score, and acquires the surrounding area information to re-calculate the route score.

3. The operation route updating device according to claim 1 or claim 2,
wherein the route updating unit determines whether the route score is equal to or greater than the second set value, and when the route score is equal to or greater than the second set value, creates the scheduled operation route with the route score of less than the second set value and updates the operation route with the scheduled operation route that has been created, and when the package score is less than the first set value and the route score is less than the second set value, continues traveling on the operation route.

4. The operation route updating device according to any one of claim 1 to claim 3,
wherein the score calculation unit acquires a value representing fragility of the package corresponding to a package type included in the package information from package master information that associates a package type with a value representing fragility of the package, and calculates the package score using the value representing fragility of the package that has been acquired.

5. The operation route updating device according to any one of claim 1 to claim 4, further comprising
a detection device to detect a state of a package loaded on the mobile object,
wherein the score calculation unit acquires a value representing fragility of the package corresponding to the state of the package from package state information that associates a state of a determination subject based on which fragility of the package is to be determined with a value representing fragility of the package, and calculates the package score using the value representing fragility of the package that has been acquired.

6. The operation route updating device according to claim 5,
wherein the detection device includes a camera device that captures an image of movement of a package loaded on the mobile object, and
wherein the score calculation unit acquires a value representing fragility of the package corresponding to the movement of the package from the package state information, and calculates the package score using the value representing fragility of the package that has been acquired.

7. The operation route updating device according to claim 5 or claim 6,
wherein the detection device includes a sound collection device that detects sound emitted from a package loaded on the mobile object,
wherein the score calculation unit acquires a value representing fragility of the package corresponding to the sound emitted from the package from the package state information, and calculates the package score using the value representing fragility of the package that has been acquired.

8. The operation route updating device according to any one of claim 1 to claim 7, further comprising
a real-time data acquisition unit to acquire real-time data as the surrounding area information from a sensor installed on the scheduled operation route or from another mobile object traveling on scheduled operation route, the real-time data being an obstacle situation on the scheduled operation route,
wherein based on the real-time data, the score calculation unit acquires a value representing a shaking degree of the mobile object corresponding to the obstacle situation in the scheduled operation route from traveling state information that associates an obstacle situation of a road with a shaking degree of a mobile object when traveling on the road, and calculates the route score using the value representing the shaking degree of the mobile object that has been acquired.

9. The operation route updating device according to any one of claim 1 to claim 8, further comprising:
an environment information acquisition unit to acquire environment information as the surrounding area information, the environment information being an environment of the scheduled operation route acquired from a database that stores environments; and
an advance data acquisition unit to acquire advance data as the surrounding area information, the advance data being a traveling situation of a road acquired from a database that collects past traveling situations,
wherein based on the environment information and the advance data, the score calculation unit acquires a value representing a shaking degree of the mobile object corresponding to a road situation on the scheduled operation route from road situation information that associates a road situation with a value representing a shaking degree of the mobile object when traveling on the road, and calculates the route score using the value representing the shaking degree of the mobile object that has been acquired.

10. The operation route updating device according to any one of claim 1 to claim 9, further comprising
a route display unit to superimpose an updated operation route on map information and display the updated operation route on a display device.

11. An operation route updating method used for an operation route updating device that updates an operation route of a mobile object loaded with a package, the operation route updating method comprising:
acquiring package information representing a state of the package loaded on the mobile object, calculating a package score that quantifies fragility of the package based on the package information, acquiring surrounding area information representing an environment of a surrounding area and a road situation of a scheduled operation route in the operation route, and calculating a route score that quantifies a shaking degree of the mobile object on the scheduled operation route based on the surrounding area information while the mobile object is traveling on the operation route, by a computer; and
determining whether the package score is equal to or greater than a first set value, and when the package score is equal to or greater than the first set value, creating the scheduled operation route with the route score of less than a second set value, and updating the operation route with the scheduled operation route that has been created, by the computer.

12. An operation route updating program used for an operation route updating device that updates an operation route of a mobile object loaded with a package, the operation route updating program causing a computer to execute:
a score calculation process of, while the mobile object is traveling on the operation route, acquiring package information representing a state of the package loaded on the mobile object, calculating a package score that quantifies fragility of the package based on the package information, acquiring surrounding area information representing an environment of a surrounding area and a road situation of a scheduled operation route in the operation route, and calculating a route score that quantifies a shaking degree of the mobile object on the scheduled operation route based on the surrounding area information; and
a route updating process of determining whether the package score is equal to or greater than a first set value, and when the package score is equal to or greater than the first set value, creating the scheduled operation route with the route score of less than a second set value, and updating the operation route with the scheduled operation route that has been created.
